(19) **Europäisches Patentamt**

**European Patent Office**

**Office européen des brevets**

(11) Publication number : **0 393 922 B1**

(12) ## EUROPEAN PATENT SPECIFICATION

(45) Date of publication of patent specification :
02.12.92 Bulletin 92/49

(51) Int. Cl.[5] : **F02F 3/12, F02F 3/14**

(21) Application number : **90303921.2**

(22) Date of filing : **11.04.90**

(54) **Piston of aluminium for internal combustion engines.**

(30) Priority : **20.04.89 JP 101298/89**

(43) Date of publication of application :
**24.10.90 Bulletin 90/43**

(45) Publication of the grant of the patent :
**02.12.92 Bulletin 92/49**

(84) Designated Contracting States :
**DE FR GB IT SE**

(56) References cited :
**EP-A- 0 224 345**
**FR-A- 2 546 570**
**PATENT ABSTRACTS OF JAPAN vol. 9, no. 87 (M-372)(1810) 17 April 1985, & JP-A-59 214521**
**PATENT ABSTRACTS OF JAPAN vol. 9, no. 70 (M-367)(1793) 30 March 1985, &JP-A-59 201952**

(56) References cited :
**PATENT ABSTRACTS OF JAPAN vol. 10, no. 109 (M-472)(2166) 23 April 1986, & JP-A-60 240854**
**PATENT ABSTRACTS OF JAPAN vol. 10, no. 10 (M-446)(2067) 16 January 1986, & JP-A-60 173346**

(73) Proprietor : **IZUMI INDUSTRIES, LTD.**
**620 Onakai, Oaza**
**Kawagoe-shi, Saitama-ken (JP)**

(72) Inventor : **Suzuki, Yoshihiro**
**4-26-1, Fujimi 3-chome, Fukigemachi**
**Kitaadachi-gun, Saitama-ken (JP)**
Inventor : **Tanoue, Shigeru**
**Higashi Danchi 3-102, Oaza-Ageomura 404-1**
**Ageo-shi, Saitama-ken (JP)**

(74) Representative : **Targett, Kenneth Stanley et al**
**D. Young & Co. 10 Staple Inn**
**London WC1V 7RD (GB)**

EP 0 393 922 B1

Jouve, 18, rue Saint-Denis, 75001 PARIS

## Description

This invention relates to a reinforced piston for an internal combustion engine, for example a direct-injection diesel engine, and to a method of manufacture of such a piston.

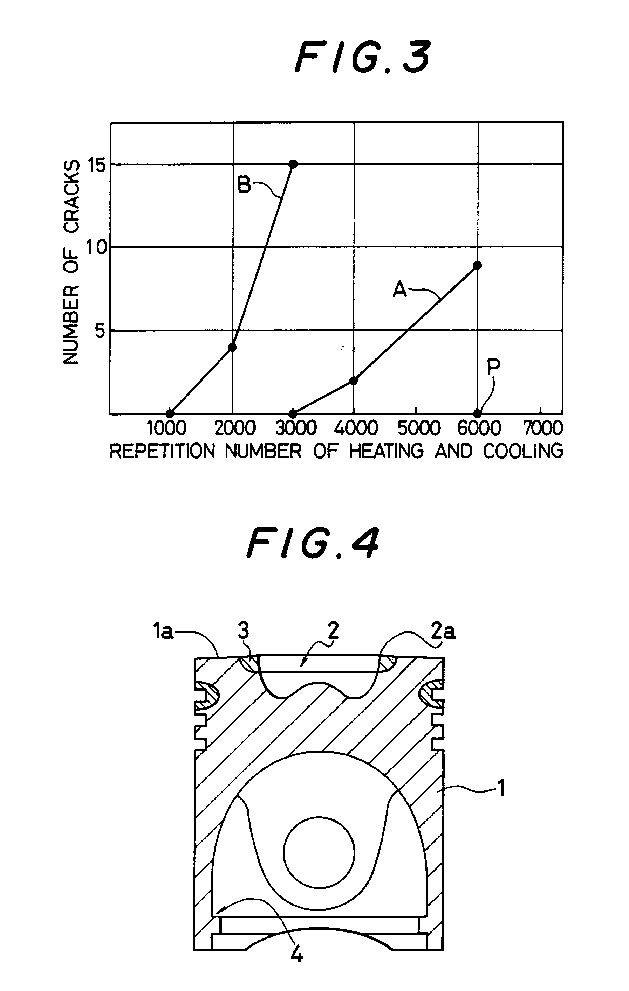

The piston to which the present invention relates is of the type, an example of which is shown in Figure 4, which comprises a body 1 of aluminium alloy having a combustion bowl 2 in the piston body and a reinforced portion 3, at the edge 2a of the bowl, of ceramic-fibre reinforced aluminium alloy. The reinforced portion is provided to make the piston less susceptible to radial cracking caused by local overheating at the edge of the combustion bowl.

Patent application JP-A-59-201952 described a piston of this type, which is made using a preform 3 of ceramic fibre, which has a predetermined density, and which is annularly formed to correspond with the edge of the combustion chamber, and set in a metal mould. After a molten aluminiun alloy is poured into the metal mould, the piston is cast under a predetermined pressure so that the molten alloy penetrates into the preform 3 to form the reinforced portion. Thus, the strength of the edge of the combustion chamber is much improved.

However, during casting, a pressure of 600 to 1200 kg/cm² needs to be applied to the molten alloy, so that the casting equipment and the metal mould must be able to endure such high pressure. Thus, the cost of the piston becomes much greater than that of a piston obtained by means of gravity casting. Further, in pressure casting, a segmented core cannot be used, as the melt penetrates into the separated part of the core. Therefore, it becomes impossible to make an undercut 4 on the inside of the piston.

Generally, it is preferable that each filament of the ceramic fibre used for such preform is arranged as much as possible in a direction perpendicular to the propagation of cracks when a metal is reinforced by the ceramic fibre, and thus, the filaments should be arranged along the circular edge of the combustion bowl. However, it is difficult to arrange the filaments of the ceramic fibre as much as possible in such a direction when the preform 3 is annularly formed during the production of preform 3. Therefore, the preform 3 cannot completely prevent cracks initiated and propagated in the direction perpendicular to the annular edge 2a of the combustion chamber 2.

The difficulty in arranging the direction of the filaments derives from the preform 3 being formed in such a manner that a slurry including the ceramic fibre of short filaments is filtered under reduced pressure. The filaments passing through the filter are apt to be arranged in a direction for being filtered, and thus, the filaments are arranged rather at random on a surface which is parallel to the filter, so that it is difficult to arrange the filaments annularly.

If the short filaments are substituted by long ones, it is easier to arrange the filaments annularly, but this is time consuming, and also, it becomes difficult to adjust the volumetric ratio of the filaments, so that the cost of the preform will rise.

In accordance with a first aspect of the present invention an improved piston is provided having a reinforced portion around the edge of the combustion bowl, that reinforced portion being formed from an extruded or drawn ceramic-fibre reinforced aluminium alloy wire fused into the piston around the edge of the combustion bowl, thereby to provide said bowl with a reinforced edge formed from said fibre-reinforced aluminium alloy with said fibres aligned circumferentially around said edge.

According to another aspect of the invention, such a piston is constructed by the steps of extruding or drawing a wire from a billet of ceramic fibre reinforced aluminium alloy such that the ceramic fibres are aligned parallel to the direction of extrusion or drawing;

forming the wire into an annulus and positioning that annulus around the edge of a combustion bowl formed in the crown of the piston;

re-melting the wire and adjacent portions of the crown of the piston using high-energy radiation; and

solidifying the melted material to form a ceramic-fibre reinforced edge to the combustion bowl formed in the crown of the piston and having said fibres circumferentially aligned around said edge.

By drawing the wire from a billet, the required direction of the fibres in the wire can be achieved. By fusing the alloy/fibre wire with the piston body using high-energy radiation, the need for high pressure casting is obviated.

An article entitled "Reinforcement of Aluminium pistons by Means of Modern Composite Materials" in "Motortechnische Zeitschrift", 49 (1988) pages 59 to 62, describes a piston having a ceramic-fibre reinforced ring set along the edge of the combustion bowl. Also patent application JP-A-59-214521 describes an abrasion resistant ring of light alloy containing inorganic or metal fibres which is fixed by electron beam welding, to the outer periphery of a piston crown, rather than around the periphery of a combustion bowl formed in the crown of the piston. In that case the abrasion resistant ring is formed by extruding a cylinder from a mix of a matrix material and fibrous reinforcement, which extruded cylinder is then sliced into individual rings. As a result of that extrusion process the reinforcement fibres will receive a degree of orientation, but in that case parallel to the axis of the ring rather than circumferentially. Neither of these publications suggests extrusion or drawing of a wire to obtain a desired direction of fibres in the wire i.e. circumferentially of the finally produced reinforcement ring.

In the piston and method of the present invention, the volumetric ratio of the ceramic fibre in the wire is preferably in a range of 5 to 30%, and also preferably at least 60% or more of the fibres in the wire form an angle of 30° or less to the longitudinal direction of the wire.

A specific embodiment and example of the present invention will now be described, for illustration, with reference to the accompanying drawings, in which:

Figure 1 is an explanatory view showing how to make test pieces extracted from a piston according to an embodiment of this invention;

Figure 2 is an explanatory view showing how to test the test pieces of Figure 1;

Figure 3 is a graphical representation of a repetition number of heating and cooling - number of cracks relationship present in the test pieces of Figure 2; and

Figure 4 is a sectional view of a conventional piston.

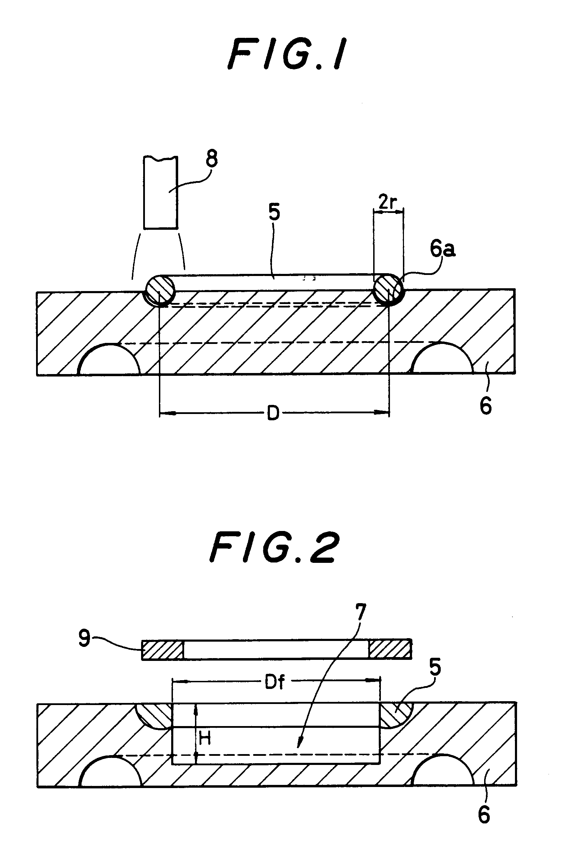

Referring to Figures 1 to 3, a piston for a direct-injection-type diesel engine, to which this invention is applied, will be described.

Firstly, a billet of an aluminum alloy including a ceramic fiber, the volumetric ratio $V_f$ of which is in a range of 5 to 30%, is made, and to obtain a fiber reinforced wire 5, it is extruded or drawn while hot. At that time, the extrusion or drawing of the billet is so adjusted as the filament arrangement ratio of the ceramic fiber becomes more than 60% inclusive. The filament arrangement ratio is defined as a percentage of filaments, which forms an angle of 30° or less with a direction for the billet being extruded or drawn, to all the filaments of the ceramic fiber. The percentage is examined in a section parallel to the direction for the billet being extruded or drawn.

Then, the fiber reinforced wire 5 is annularly formed substantially in accordance with the diameter of the edge 2a of an open combustion chamber 2 which is provided in a piston 1, and embedded in the edge 2a. Thus, the fiber reinforced wire 5 is remelted by high-energy radiation with a part of the edge 2a of the combustion chamber 2, which is adjacent to the fiber reinforced wire 5, and thereby, the fiber reinforced wire 5 becomes completely integral with the edge 2a. The high-energy radiation is generated by a TIG-welder or a laser beam generator, and the ceramic fiber of the billet is made of alumina, silicon carbide, silicon nitride, or alumina-silica, which may be crystalline, amorphous or whiskery.

Moreover, the filament of the ceramic fiber has preferably a diameter of 15 μm or less from a viewpoint of the compounding characteristic of the piston and the extruding or drawing characteristic of the billet, and has preferably a length of 1 mm or less so as to obtain such a billet as the ceramic fiber thereof has a necessary high volumetric ratio $V_f$.

The reason why the volumetric ratio is selected in a range of 5 to 30% is assigned as follows. If $V_f$ is less than 5%, it becomes difficult to improve the strength of the aluminum alloy by mixing the ceramic fiber, and if $V_f$ is more than 30%, it becomes difficult to plastically work the billet. Further, the filaments of the ceramic fiber are entangled with one another while the billet is plastically worked, and as a result, an improvement of the filament arrangement ratio can not be obtained. The strength of the aluminum alloy is improved as the filament arrangement ratio increases, but if the arrangement ratio exceeds 60%, the strength is hardly improved.

Generally, the strength of the aluminum alloy is improved, as the length of the filament and the filament arrangement ratio increase. The filament is cut off during extruding or drawing of the billet, and there are the following relationships among the length of the filament after plastic working, the arrangement ratio of the filaments in the fiber reinforced wire, the rate of plastic working of the billet, and the temperature at the time of plastic working. The rate of plastic working has a normal correlation with the arrangement ratio, and a reverse correlation with the length of the filament. Further, the temperature at the time of plastic working has a reverse correlation with the arrangement ratio, and a normal correlation with the length of the filament. Thus, the arrangement ratio of 60% was determined referring to the above relationships.

A comparative test is made between a piston of this invention and a conventional piston reinforced by a preform. In the piston of this invention, a cylindrical preform, which is 45 mm in diameter and 45 mm in length, is firstly made of silicon-carbide whiskers which has $V_f$ of 15%, and each diameter and length of which are in a range of 1 to 0.1 μm and in a range of 10 to 300 μm, respectively. Then, the preform is set in a metal mold, and a molten aluminum, which has a purity of 99.7% and a temperature of 780°C, is poured into the metal mold under a pressure of 700 kg/cm² in order to penetrate the aluminum into the preform. Thus, a billet is obtained.

After the billet is machined to have a diameter of 40 mm and a length of 40 mm, the billet is plastically worked by extrusion working under a temperature of 640°C and a pressure of 20,000 kg to obtain a fiber reinforced wire of 7 mm in diameter. At that time, the arrangement ratio is 95% on an average.

Thereafter, the fiber reinforced wire 5 is annularly formed as shown in Figure 1. The ring 5 of fiber reinforced wire has a diameter D of 55 mm (Figure 1).

On the other hand, a piston is made of aluminum alloy (JIS: AC8A), and as shown in Figure 1, a test piece 6 for thermal shock test is cut out from the head of the piston. In the test piece 6, an annular groove 6a, the section of which is of semicircle of 4 mm, has been provided, and the ring 5 is fitted into the annular groove 6a.

The test piece 6 (hereinafter designated as the first test piece) is then preheated at a temperature 200°C. The ring 5 and the annular groove 6a are remelted by the help of a TIG-welder so far that the remelted depth becomes substantially 6 mm, and then, solidified. The welder is operated under a following condition, and reference numeral 8 (Figure 1) denotes an electrode of the TIG-welder.

Voltage: 35V; Current: 200A; Feed Rate of Electrode: 100 mm/min.

As shown in Figure 2, a recess 7, which has a diameter $D_f$ of 50 mm and a depth H of 15 mm, is provided in the central part of the first test piece 6. The recess 7 is imitated in configuration from an actual combustion chamber which is provided in a piston.

In another test piece (hereinafter designated as the second test piece) which is to be compared with the first test piece, a slurry which includes silicon-carbide whiskers is firstly filtered under reduced pressure. The silicon-carbide whiskers used are the same as those used in making the first test piece, and the diameter and the length of the silicon-carbide whisker are in a range of 1 to 0.1 μm and in a range of 10 to 300 μm, respectively.

After the whiskers are dried under a predetermined pressure, a preform is made. At that time, the volumetric ratio $V_f$ of the whiskers is 15%, and the figure and size of the preform are substantially the same as those of the ring 5 shown in Figure 2.

Thereafter, the preform is set in a metal mold, and a molten aluminum alloy (JIS: AC8A) is poured into the metal mold so as to make a piston by pressure casting. The piston is then finished by machine to obtain the second test piece shown in Figure 2.

In the comparative test, a high-frequency current is supplied to a heating coil 9, which is arranged as shown in Figure 2, to repeat alternate heating and air-cooling at a temperature between 400°C and 150°C and at the period of 12 sec/cycle.

According to test results shown in Figure 3, in case of the second test piece, cracks are found after a repetition of 4000 cycles as indicated in a polygonal line A, but in case of the first test piece, no crack is found after a repetition of 6000 cycles as indicated in point P.

In Figure 3, there is illustrated a third test result which is obtained by testing such a test piece as to imitate a piston which is made by gravity casting, and whose edge of a combustion chamber is not reinforced at all. According to the third test result indicated in a polygonal line B, it is apparent that cracks easily initiate.

As may be seen from the above description, the strength of the edge of the combustion chamber, which is provided in the piston, is much improved due to application of this invention, and if mechanical repeated stresses, and thermal stresses caused by a local and repeated heating of high-temperature gases are imposed on the edge of the combustion chamber, the piston is surely prevented from being damaged.

## Claims

1. An internal combustion engine piston comprising a body (6) of aluminium alloy having a combustion bowl (7) in the piston body and a reinforced portion (5) at the edge of the bowl, of ceramic-fibre reinforced aluminium alloy, characterised in that the reinforced portion is formed from an extruded or drawn ceramic-fibre reinforced aluminium alloy wire fused into the piston around the edge of the combustion bowl, thereby to provide said bowl with a reinforced edge formed from said fibre-reinforced aluminium alloy with said fibres aligned circumferentially around said edge.

2. A piston as claimed in claim 1, wherein the volumetric ratio of the ceramic fibres in the reinforced portion is in the range of 5% to 30%.

3. A piston as claimed in claim 1 or 2, wherein at least 60% of the fibres in the wire form an angle of 30° or less to the longitudinal direction of the wire.

4. A method of manufacturing an internal combustion engine piston, comprising the steps of:
   extruding or drawing a wire from a billet of ceramic fibre reinforced aluminium alloy such that the ceramic fibres are aligned parallel to the direction of extrusion or drawing;
   forming the wire into an annulus and positioning that annulus around the edge of a combustion bowl formed in the crown of the piston;
   re-melting the wire and adjacent portions of the crown of the piston using high-energy radiation; and
   solidifying the melted material to form a ceramic-fibre reinforced edge to the combustion bowl-formed in the crown of the piston and having said fibres circumferentially aligned around said edge.

5. A method as claimed in claim 4, wherein said wire is formed from a billet of ceramic fibre reinforced aluminium alloy containing 5 to 30% by volume of fibre reinforcement.

6. A method as claimed in claim 4 or 5, wherein in the drawn wire, at least: 60% of the fibres form an angle of 30° or less to the direction of extrusion or drawing.

## Patentansprüche

1. Kolben für eine Verbrennungskraftmaschine mit einem Korpus (6) aus einer Aluminiumlegierung, welcher eine Brennmulde (7) in dem Kolbenkorpus hat sowie einen verstärkten Abschnitt (5) aus einer keramikfaserverstärkten Aluminiumlegierung am Rand der Mulde hat, dadurch gekennzeichnet, daß der verstärkte Abschnitt aus einem extrudierten oder gezogenen mit Keramikfaser verstärktem Aluminiumlegierungsdraht gebildet ist, welcher entlang des Randes der Brennmulde in den Kolben eingeschmolzen ist, um dadurch die Mulde mit einer verstärkten Kante zu versehen, welcher aus der faserverstärkten Aluminiumlegierung gebildet ist, bei welcher die Fasern in Umfangsrichtung entlang des Randes ausgerichtet sind.

2. Kolben nach Anspruch 1, wobei das Volumenverhältnis der Keramikfasern in dem verstärkten Abschnitt im Bereich von 5 % bis 30 % liegt.

3. Kolben nach Anspruch 1 oder 2, wobei zumindest 60 % der Fasern in dem Draht einen Winkel von 30° oder weniger mit der Längsrichtung des Drahtes bilden bzw. einschließen.

4. Verfahren zum Herstellen eines Kolbens für einen Verbrennungsmotor, mit den folgenden Schritten:

Extrudieren oder Ziehen eines Drahtes aus einem Barren einer mit Keramikfasern verstärkten Aluminiumlegierung, derart, daß die Keramikfasern parallel zur Richtung der Extrusion oder des Ziehens ausgerichtet werden,

Formen des Drahtes zu einem Ring und Anordnen des Ringes entlang des Randes einer Brennmulde (Verbrennungskammer), die in der Krone (im oberen Teil) des Kolbens ausgebildet ist,

Wiederaufschmelzen des Drahtes und der angrenzenden Teile der Krone des Kolbens unter Verwendung einer hochenergetischen Strahlung, und

Festwerdenlassen des geschmolzenen Materials, um einen mit Keramikfasern verstärkten Rand der Brennmulde zu bilden, welche in der Krone des Kolbens ausgebildet ist, und welcher die Fasern in Umfangsrichtung entlang des Randes ausgerichtet hat.

5. Verfahren nach Anspruch 4, wobei der Draht aus einem Barren aus einer faserversärkten Aluminiumlegierung gebildet ist, welche 5 bis 30 Vol.-% an Faseverstärkung aufweist.

6. Verfahren nach Anspruch 4 oder 5, wobei in dem gezogenen Draht zumindest 60 % der Fasern einen Winkel von 30° oder weniger mit der Richtung der Extrusion oder des Ziehens einschließen.

**Revendications**

1. Piston pour moteur à combustion interne comprenant un corps (6) en alliage d'aluminium comportant une cuvette de combustion (7) dans le corps de piston et une portion renforcée (5) au bord de la cuvette, en alliage d'aluminium renforcé par fibres céramiques, caractérisé en ce que la portion renforcée est formée à partir d'un fil d'alliage d'aluminium renforcé par fibres céramiques extrudé ou étiré, fondu dans le piston autour du bord de la cuvette de combustion, de manière à doter ladite cuvette d'un bord renforcé formé à partir dudit alliage d'aluminium renforcé par fibres avec lesdites fibres alignées circonférentiellement autour dudit bord.

2. Piston selon la revendication 1, dans lequel le rapport volumétrique des fibres céramiques dans la portion renforcée est compris entre 5 et 30 %.

3. Piston selon la revendication 1 ou 2, dans lequel au moins 60 % des fibres dans le fil forment un angle inférieur ou égal à 30° par rapport à la direction longitudinale du fil.

4. Procédé de fabrication d'un piston pour moteur à combustion interne, comprenant les opérations consistant à :

extruder ou étirer un fil d'une billette d'alliage d'aluminium renforcé par fibres céramiques de manière que les fibres céramiques soient alignées parallèlement à la direction d'extrusion ou d'étirage;

former le fil en un anneau et positionner ledit anneau autour du bord d'une cuvette de combustion formée dans la couronne du piston;

faire fondre de nouveau le fil et les portions adjacentes de la couronne du piston en utilisant un rayonnement d'énergie élevée; et

solidifier le matériau fondu pour former un bord renforcé par fibres céramiques à la cuvette de combustion formée dans la couronne du piston et avec lesdites fibres alignées circonférentiellement autour dudit bord.

5. Procédé selon la revendication 4, dans lequel ledit fil est formé à partir d'une billette d'alliage d'aluminium renforcé par fibres céramiques contenant de 5 à 10 % en volume de fibres de renforcement.

6. Procédé selon la revendication 4 ou 5, dans lequel, dans ledit fil étiré, au moins 60 % des fibres forment un angle inférieur ou égal à 30° par rapport à la direction d'extrusion ou d'étirage.

# FIG.1

# FIG.2

# F I G. 3

# F I G. 4